# EUROPEAN PATENT APPLICATION

(11) **EP 4 667 217 A1**
(43) Date of publication of application: **24.12.2025**
(21) Application number: 24183575.0
(22) Date of filing: 21.06.2024
(51) Int. Cl.: B32B 27/08, B32B 27/30, C08J 5/18

(54) **MULTI-LAYER FOIL**

(71) Applicant: medmix Switzerland AG, 9469 Haag (Rheintal) (CH)
(72) Inventor: BODENMÜLLER, Tobias, 88097 Eriskirch (DE)
(74) Representative: Manitz Finsterwald Patent- und Rechtsanwaltspartnerschaft mbB

(57) **Abstract**

The present invention relates to a multi-layer foil comprising an inner layer, a first outer layer on a first side of the inner layer, and a second outer layer on a second side of the inner layer, wherein the inner layer has a thickness of 15 to 60 µm and comprises ethylene-vinyl alcohol copolymer and/or polyvinyl alcohol, the first outer layer has a thickness of 25 to 80 µm and comprises a first polyolefin, and the second outer layer has a thickness of 25 to 80 µm and comprises a second polyolefin. The invention further relates to a flexible packaging comprising the multi-layer foil, to the use of the multi-layer foil in a packaging material for an adhesive, to the use of the multi-layer foil in a packaging material for a two-component system, and to a cartridge comprising a flexible film which comprises the multi-layer foil.

## Description

The present invention relates to a multi-layer foil comprising an inner layer, a first outer layer on a first side of the inner layer, and a second outer layer on a second side of the inner layer, wherein the inner layer comprises ethylene-vinyl alcohol copolymer and/or polyvinyl alcohol, the first outer layer comprises a first polyolefin, and the second outer layer comprises a second polyolefin. The invention further relates to a flexible packaging comprising the multi-layer foil, to the use of the multi-layer foil in a packaging material for an adhesive, to the use of the multi-layer foil in a packaging material for a two-component system, and to a cartridge for a material to be dispensed, the cartridge comprising a flexible film forming a cartridge wall, wherein the flexible film comprises the multi-layer foil.

Flexible packaging finds use in many different sectors, such as food and beverages, consumer and household products, pharmaceutical and medical products, healthcare, cosmetics and toiletries, retail non-food, nutritional supplements, agriculture, horticulture, and pet foods, but also in products for various industrial applications.

In the industrial sector, in the construction industry, and also in the dental sector, cartridges are frequently used to store liquid flowable, frequently pasty or viscous to highly viscous substances and to dispense them for the respective application as required. Examples for such substances are joint sealing compounds, compounds for chemical dowels or chemical anchors, adhesives, pastes or impression materials in the dental sector.

A distinction is made between single-component systems in which the material to be dispensed is only made of one component and two-component or multicomponent systems in which at least two different components are stored in separate chambers of the same cartridge or in separate cartridges. Examples for this are two-component adhesives or chemical dowels which only harden after the mixing of the two components. Two-component systems are in particular also used in the industrial sector for paints which are often used to generate functional protective layers such as for corrosion protection.

For reasons of environmental protection, flexible packaging by means of film cartridges is increasingly being used. Such packages are disclosed, for example, in WO 2020/069784 A1. In contrast to regular cartridges which are completely produced from plastic in an injection molding process, at least parts of film cartridges are designed as a film. Usually the cartridge wall(s) bounding the cartridge chamber(s) is/are made of a film which is connected to a head part made of rigid material, e.g. plastic, comprising the dispensing outlet. This has several advantages. On the one hand, the unfilled film cartridges can be stored and transported in a collapsed state from the cartridge manufacturers to the manufacturers of the filling materials (media) who then take care of the filling of the empty cartridges. Only after being filled the film cartridge is in its expanded state which is comparable in size to a regular non-collapsible cartridge. This means that the necessary space for storage and for transportation can be reduced, since the collapsed cartridges have a reduced size in comparison to regular non-collapsible cartridges.

On the other hand, once the cartridges have been used, i.e. reduced to the collapsed state by dispensing the filling material, the cartridges are significantly reduced in size and weight in comparison to regular cartridges so that the cost of disposal is also reduced. In any case the carbon footprint associated with the film cartridges is reduced in comparison to plastic cartridges that are completely formed in an injection molding process.

Depending on the sensitivity of the product to be packaged, it is often desirable for the flexible packaging material to exhibit gas barrier properties, particularly with regard to the permeation of oxygen into the interior of the package, in order to protect the packaged product from oxidation. Such flexible packaging materials are typically multi-layer foils comprising synthetic polymer layers which may be combined with metal layers.

Moreover, especially with regard to liquid products, it is also crucial that the contents of the flexible package are prevented from leaking out during shipping and storage. This is particularly so when chemical or industrial products are to be packaged. Such compositions frequently contain aggressive ingredients, such as solvents, acids, bases, oxidizing agents, and so forth. For example, when a flexible packaging material comprising one or more polymer layers is exposed to an organic solvent for an extended period of time, swelling of the polymer can occur, which may lead to gradual dissolution of the polymer in the solvent and/or diffusion of the solvent through the polymer, ultimately allowing the contents of the package to spill out. This not only results in loss of the stored product and contamination of the immediate surrounding of the defective package. Such a leak can also pose a considerable health and safety risk, as the product which is inadvertently released in this manner may, for example, be toxic, flammable, and/or corrosive.

Known foils for flexible packaging of industrial products, such as the ones disclosed in WO 2020/069784 A1, may contain one or more layers of polyamide. Other known multi-layer foils for flexible packaging are laminates obtained by laminating individual, pre-formed layers together by means of adhesives.

However, the present inventors have found that, owing to their limited chemical resistance, such known multi-layer foils are not well-suited for use in packaging some liquid chemical products, which leads to insufficient shelf life. For example, it was found that laminates as well as coextruded multi-layer foils comprising one or more polyamide layers showed unsatisfactory stability towards the amine-containing component of a liquid, two-component amine-epoxy system, resulting in leakage of the fluid after a relatively short period of time.

Therefore, there is still a need for a multi-layer foil which is flexible and light-weighted, but at the same time exhibits high chemical resistance.

This problem is solved by a multi-layer foil having the features of claim 1.

Such a multi-layer foil comprises an inner layer, a first outer layer on a first side of the inner layer, and a second outer layer on a second side of the inner layer, wherein the inner layer has a thickness of 15 to 60 µm and comprises ethylene-vinyl alcohol copolymer (EVOH) and/or polyvinyl alcohol (PVOH), the first outer layer has a thickness of 25 to 80 µm and comprises a first polyolefin, and the second outer layer has a thickness of 25 to 80 µm and comprises a second polyolefin.

The present inventor has found that a multi-layer foil having a structure as defined above constitutes a flexible material having excellent barrier properties and chemical stability. When the multi-layer foil is used as a flexible packaging material, these favorable properties allow long-term storage of fluid materials without leakage.

The inner layer comprises ethylene-vinyl alcohol copolymer (EVOH) and/or polyvinyl alcohol (PVOH). The use of such materials results in several beneficial effects.

First, layers of EVOH and/or PVOH can serve as highly effective gas barriers.

The presence of at least one of these polymers in the inner layer ensures that the diffusion of gases, such as oxygen, through the multi-layer foil is prevented, thus extending the shelf life of a product packaged in the multi-layer foil, in particular when said product is oxidation-sensitive, which may be the case, for example, in food, pharmaceutical, or industrial packaging applications.

Moreover, also gases and vapors which may be emitted by a product packaged in the multi-layer foil are prevented from being released to the outside. This effect is particularly advantageous when said gases or vapors are potentially harmful and/or malodorous, as may be the case for many chemical products. In other applications, e.g. when the multi-layer foil is used for packaging food or cosmetics, the barrier properties of EVOH and/or PVOH can prevent the loss of fragrances or other volatile ingredients without absorbing them.

Second, owing to the hydrophilic nature of EVOH and PVOH, the presence of an inner layer comprising at least one of these polymers can also prevent the permeation of unpolar liquids, such as organic solvents, hydrocarbons, or mineral oils. EVOH and PVOH are also highly resistant to solvent absorption and swelling, thus making the multi-layer foil of the present invention especially suitable for packaging fluid products containing organic solvents and/or chemicals.

To achieve sufficient barrier properties, the inner layer comprising the EVOH and/or PVOH needs to have a certain minimum thickness. On the other hand, if the inner layer is overly thick, an unnecessary increase in product cost and weight may result, and the flexibility of the resulting multi-layer foil may decrease, i.e., the foil may become too rigid. Therefore, the inner layer has a thickness of 15 to 60 µm, in particular 20 to 60 µm or 25 to 60 µm. Preferably, the inner layer has a thickness of 15 to 55 µm, in particular 20 to 55 µm or 25 to 55 µm. More preferably, the inner layer has a thickness of 15 to 50 µm, in particular 20 to 50 µm or 25 to 50 µm. Even more preferably, the inner layer has a thickness of 15 to 45 µm, in particular 20 to 45 µm or 25 to 45 µm. Especially preferably, the inner layer has a thickness of 15 to 40 µm, in particular 20 to 40 µm or 25 to 40 µm. Most preferably, the inner layer has a thickness of 15 to 35 µm, in particular 20 to 35 µm, 20 to 30 µm, 25 to 35 µm or 25 to 30 µm.

PVOH is obtained by polymerization of vinyl acetate to give polyvinyl acetate (PVA or PVAc), followed by saponification. EVOH is obtained by copolymerization of ethylene and vinyl acetate to give poly(ethylene-vinyl acetate) (EVA, PEVA), followed by saponification. The EVOH and/or PVOH comprised in the inner layer of the multi-layer foil has a degree of saponification of preferably 90 mol-% or more, more preferably 95 mol-% or more, even more preferably 98 mol-% or more, especially preferably 99 mol-% or more, most preferably 99.5 mol-% or more.

The lower the ethylene content of EVOH, the better its barrier properties. On the other hand, EVOH grades having a higher ethylene content can be extruded at lower temperatures. Therefore, in order to achieve a good balance between barrier properties and extrudability, the inner layer preferably comprises an ethylene-vinyl alcohol copolymer having an ethylene content of 20 to 50 mol-%, more preferably 25 to 45 mol-%. In particular, the ethylene content may be selected from a range of 25 to 40 mol-%, from a range of 30 to 45 mol-%, or from a range of 30 to 40 mol-%.

The inner layer may comprise EVOH, PVOH, or a blend of both EVOH and PVOH. Preferably, however, the inner layer comprises EVOH. More preferably, the inner layer does not comprise PVOH. Since EVOH is partially derived from ethylene monomers, it is easier to process by melt extrusion and exhibits higher resistance to humidity than PVOH. Therefore, EVOH is preferred over PVOH.

Besides EVOH and/or PVOH, the inner layer may comprise minor amounts of additives, such as other polymers, processing aids, antioxidants, colorants, and the like, as long as such additives do not adversely influence the properties of the inner layer, in particular the barrier properties of the inner layer. The types and amounts of said additives may be adjusted depending on the desired properties of the inner layer. However, the amount of EVOH and/or PVOH (i.e., the amount of EVOH, the amount of PVOH, or, when a blend of EVOH and PVOH is used, the combined amount of EVOH and PVOH) in the inner layer is typically at least 50%, preferably at least 75%, more preferably at least 90%, even more preferably at least 95%, most preferably at least 99% by weight, based on the entire weight of the inner layer.

In particular, the inner layer consists, or essentially consists, of PVOH and/or EVOH. Preferably, the inner layer consists, or essentially consists, of EVOH.

The first outer layer has a thickness of 25 to 80 µm and comprises a first polyolefin, and the second outer layer has a thickness of 25 to 80 µm and comprises a second polyolefin. By including polyolefin-containing outer layers with a minimum thickness of 25 µm, both mechanical stability and excellent moisture barrier properties are provided to the multi-layer foil. On the other hand, limiting the thickness of the polyolefin-containing outer layers to 80 µm or less ensures that the multi-layer film remains flexible and avoids an unnecessary increase in product cost and weight.

The first outer layer has a thickness of preferably 30 to 80 µm, more preferably 40 µm to 80 µm, even more preferably 45 to 75 µm, most preferably 50 to 70 µm.

The second outer layer has a thickness of preferably 30 to 80 µm, more preferably 40 µm to 80 µm, even more preferably 45 to 75 µm, most preferably 50 to 70 µm.

The thickness of the first outer layer and the thickness of the second outer layer may be the same, but may also differ from each other as long as the thickness of each individual outer layer remains within the above-mentioned range of 25 to 80 µm. In other words, the thickness of the first outer layer and the thickness of the second outer layer may be adjusted independently from each other.

The combined thickness of the first and the second outer layer is selected from the range of 50 to 160 µm, preferably 70 to 150 µm, more preferably 90 to 140, even more preferably 110 to 130 µm.

The multi-layer foil preferably has a total thickness of 110 to 180 µm, more preferably 120 to 150 µm, even more preferably 130 to 160 µm, and most preferably 140 to 150 µm.

The thickness of the inner layer is preferably more than 10%, more preferably more than 12%, even more preferably more than 14%, and most preferably more than 15% of the total thickness of the multi-layer foil. Furthermore, the thickness of the inner layer is preferably less than 60%, more preferably less than 50%, even more preferably less than 40%, most preferably less than 30% of the total thickness of the multi-layer foil.

The ratio of the thickness of the inner layer to the thickness of the first outer layer and second outer layer combined (i.e., the ratio of the thickness of the inner layer to the sum of the thicknesses of the two outer layers) is preferably 1:10 to 1:1, in particular 1:8 to 1:1 or 1:6 to 1:1. More preferably, the ratio is 1:8 to 1:2, in particular 1:6 to 1:2. Even more preferably, the ratio is 1:6 to 1:4.

The first and second polyolefin are polymeric, saturated hydrocarbons obtained by polymerization of alkenes (olefins), such as ethylene, propylene, or butylene. In the multi-layer foil of the present invention, the first polyolefin and the second polyolefin are not particularly limited. Typical examples of suitable polyolefins are polyethylene (PE), polypropylene (PP), polybutylene (PB), polyisobutylene (PIB), and polymethylpentene (PMP). The first polyolefin comprised in the first layer may be a single polyolefin, or may be a blend of two or more individual polyolefins. The second polyolefin comprised in the second layer may be a single polyolefin, or may be a blend of two or more individual polyolefins.

The first polyolefin and/or the second polyolefin may be a homopolymer, i.e. a polymer which is essentially derived from a single type of olefin monomer, or may be a copolymer, i.e. a polymer which is derived from two or more types of olefin monomers, such as, for example, a copolymer of ethylene and propylene.

The first outer layer and/or the second outer layer may comprise further components beside the first and second polyolefin, as long as these components do not adversely affect the properties of the respective outer layer. For example, besides the first and second polyolefin, minor amounts of additives may be present in the first and/or second outer layer, such as other polymers, processing aids, antioxidants, colorants, and the like. The types and amounts may be different in the first and the second outer layer, or may be the same in the first and the second outer layer. However, the first outer layer typically comprises the first polyolefin in an amount of at least 50%, preferably at least 75%, more preferably at least 90%, even more preferably at least 95%, most preferably at least 99% by weight, based on the entire weight of the first outer layer, and the second outer layer typically comprises the second polyolefin in an amount of at least 50%, preferably at least 75%, more preferably at least 90%, even more preferably at least 95%, most preferably at least 99% by weight, based on the entire weight of the second outer layer.

In particular, the first outer layer consists, or essentially consists, of the first polyolefin. Preferably, the first outer layer consists, or essentially consists, of polyethylene or polypropylene.

In particular, the second outer layer consists, or essentially consists, of the second polyolefin. Preferably, the second outer layer consists, or essentially consists, of polyethylene or polypropylene.

The first polyolefin may be different from the second polyolefin, or the first polyolefin may be identical to the second polyolefin. A multi-layer foil wherein the polyolefin in both outer layers is the same can be simpler to manufacture than a multi-layer foil comprising different polyolefins. On the other hand, when the first polyolefin is different from the second polyolefin, it is possible to adapt the composition of the first and second layer to different requirements, for example depending on the respective environment to which each of the outer layers will be exposed when the multi-layer foil is in use. For instance, the first outer layer may be intended as an interior surface which comes into direct contact with the packaged product, so that the first polyolefin may, for example, be selected with the aim of maximizing chemical resistance, while the second outer layer may be intended as an exterior surface, so that the second polyolefin may, for example, be selected with the aim of imparting increased resistance to mechanical stress (such as puncture resistance or abrasion resistance), and/or providing a surface that would be suitable for printing.

The first polyolefin and/or the second polyolefin preferably comprises polyethylene (PE) or polypropylene (PP), more preferably low-density polyethylene (LDPE, PE-LD) or high-density polyethylene (HDPE, PE-HD). As mentioned above, the first polyolefin and the second polyolefin may be the same or different. For example, the first outer layer may comprise HDPE as the first polyolefin, while the second layer may comprise LDPE as the second polyolefin. In another example, the first outer layer may comprise LDPE as the first polyolefin, while the second outer layer may also comprise HDPE as the second polyolefin. In yet another example, the first outer layer may comprise LDPE as the first polyolefin, while the second layer may comprise HDPE as the second polyolefin. In a further example, the first outer layer may comprise LDPE as the first polyolefin, while the second outer layer may also comprise HDPE as the second polyolefin.

LDPE is a branched polyethylene which typically has a lower density (ranging from about 0.915 g/cm³ to about 0.935 g/cm³) and a lower degree of crystallinity (ranging from about 40% to about 50%) than HDPE, which is a mostly linear (unbranched) polyethylene having a density ranging from about 0.94 g/cm³ to about 0.965 g/cm³ and a degree of crystallinity ranging from about 60% to about 80%. Therefore, in the context of the present application, the term "LDPE" denotes polyethylene having a density of less than 0.940 g/cm³, while the term "HDPE" denotes polyethylene having a density of 0.940 g/cm³ or more.

Identical compositions may be used in the first outer layer and the second outer layer, i.e. the first polyolefin and the second polyolefin may be identical, the amount (weight percentage) of the polyolefin in the first and second outer layer may be identical, and the types and amounts (weight percentages) of any additives, if present, may be identical in the first and the second outer layer.

The multi-layer foil of the present invention is preferably free of polyamide and/or free of polyurethane. Multi-layer foils comprising one or more polyamide-containing layers and/or polyurethane-containing layers are known. However, the present inventors have found that such multi-layer foils are not well-suited for use in packaging liquid chemical products, such as adhesives, owing to the limited chemical resistance of polyamide-containing and polyurethane-containing layers, which leads to insufficient shelf life. For example, it was found that coextruded multi-layer foils comprising a polyamide layer showed unsatisfactory stability towards the amine-containing component of a liquid, two-component amine-epoxy system, resulting in leakage of the fluid after a relatively short period of time.

The multi-layer foil of the present invention preferably contains no adhesive between individual layers, in particular no (poly)urethane-based adhesive. This is due to the lack of resistance of available adhesive systems towards liquid chemical products. For example, the present inventor has found that when a laminated multi-layered foil with an adhesive between individual layers is unable to withstand prolonged exposure to the amine-containing component of a liquid, two-component amine-epoxy system, which results in insufficient shelf life due to delamination of the laminated layers and leakage of the liquid from the package.

Therefore, the multi-layer foil of the present invention is preferably not a laminated multi-layered foil.

The multi-layer foil of the present invention is preferably an extruded foil. In particular, it is a coextruded foil. Coextrusion directly combines two or more streams of molten polymers into a multilayer product and thus dispenses with the need to provide an adhesive between the individual polymer layers. For the reasons outlined above, the absence of an adhesive facilitates the production of a chemically resistant multilayer foil.

More preferably, the multi-layer foil may be produced by blown (co)extrusion.

When the multi-layer foil is produced by multilayer coextrusion, all of the individual polymer layers are preferably extruded simultaneously. For instance, when the multi-layer foil comprises no additional layers besides the inner layer and the two outer layers, it may be formed by three-layer coextrusion, preferably by three-layer blown coextrusion. If any additional polymer layers are present in the multi-layer foil, it is preferably formed by four-layer coextrusion, five-layer coextrusion, and so forth, more preferably by four-layer blown coextrusion, five-layer blown coextrusion, and so forth.

In the multi-layer foil, additional layers may be present in addition to the inner layer, the first outer layer, and the second outer layer. As a result, the multi-layer foil may comprise three layers or more than three layers, for instance up to four layers, up to five layers, or up to six layers. However, preferably, the multi-layer foil comprises only three layers, i.e. the multi-layer foil preferably consists of the inner layer, the first outer layer, and the second outer layer.

The multi-layer foil may contain a coextruded tie layer between the first outer layer and the inner layer, and/or a coextruded tie layer between the second outer layer and the inner layer. However, preferably the multi-layer foil does not contain any tie layers.

Preferably, the multi-layer foil does not comprise any metal (e.g., aluminum) layers or metallized layers.

In the multi-layer foil, the first outer layer is preferably in direct contact with the inner layer. Furthermore, the second outer layer is preferably in direct contact with the inner layer.

Preferably, the multi-layer film is a three-layer film produced by blown coextrusion comprising no adhesives and no further layers in addition to the inner layer, the first outer layer, and the second outer layer. Exemplary embodiments based on such a configuration are summarized in Table 1 below.

**Table 1**

| embodiment no. | first outer layer | | inner layer | | second outer layer | |
|---|---|---|---|---|---|---|
| | material | thickness (µm) | material | thickness (µm) | material | thickness (µm) |
| 1 | HDPE | 60 | EVOH | 25 | LDPE | 60 |
| 2 | LDPE | 60 | EVOH | 25 | LDPE | 60 |
| 3 | HDPE | 60 | EVOH | 25 | HDPE | 60 |
| 4 | LDPE | 60 | EVOH | 25 | HDPE | 60 |

The present invention also relates to a flexible packaging comprising the multi-layer foil as described above. The product to be packaged in the flexible packaging is not particularly limited, and may be a fluid or a solid. The flexible packaging may advantageously be used in the packaging of, for instance, food, beverage, nutritional, medical, pharmaceutical, veterinary, cosmetic, toiletry, consumer/household, agricultural, horticultural, and chemical or industrial products.

Especially advantageously, the product to be packaged in the flexible packaging is a liquid at room temperature (23°C), in particular a liquid product containing organic solvents and/or chemicals. Some non-limiting examples of products which may be packaged in the flexible packaging of the present invention include adhesives, fuel additives, lubricants, detergents, disinfectants, oils, solvents, cleaning fluids, inks, paints, coatings, and flooring compositions.

The present invention also relates to the use of the multi-layer foil as described above in a packaging material for an adhesive, preferably a two-component adhesive. The use of the multi-layer foil in such applications is particularly advantageous, since it has been found that, when compared to conventional flexible packaging materials, the multi-layer foil of the present invention shows enhanced chemical resistance towards adhesives, which results in improved shelf life. The adhesive is not limited to amine-epoxy adhesives, but may be any adhesive composition; it may also be, for example, an acrylate-based adhesive, a polyurethane adhesive, a silicone-based adhesive, or a polyvinyl acetate-based adhesive.

The present invention further relates to the use of the multi-layer foil as described above in a packaging material for a two-component system including a first component comprising an epoxy resin and a second component comprising an amine.

The use of the multi-layer foil in such an application is particularly advantageous, since it has been found that, when compared to conventional flexible packaging materials, the multi-layer foil of the present invention shows enhanced chemical resistance towards two-component amine-epoxy systems, which results in improved shelf life. The amine-epoxy two-component system to be packaged is not limited to adhesives, and may be any two-component system based on at least one epoxy resin and at least one amine curing agent (hardener); it may also be, for example, a flooring composition, a coating composition, or a repair mortar.

The epoxy resin may be any resin which contains at least one epoxide group that is reactive with amine hardeners. Some non-limiting examples include bisphenol-based epoxy resins, Novolak-based epoxy resins, cycloaliphatic epoxides, and epoxidized vegetable oils. The amine curing agent (hardener) may be any primary or secondary amine that is reactive with epoxides. Some non-limiting examples include aliphatic amines, polyethylene amines, cycloaliphatic amines, polyether amines, aromatic amines, and polyurethane-based amines.

The present invention also relates to a cartridge for a material to be dispensed, comprising a rigid head part having a dispensing outlet and a flexible film forming a cartridge wall, with the film bounding a cartridge chamber for the material to be dispensed, extending at least partially in a longitudinal direction of the cartridge and having a front end that is connected to the head part, wherein the flexible film comprises the multi-layer foil as described above.

Such a cartridge combines the advantages of collapsible film cartridges (reduction of size, weight, and cost of disposal, as compared to conventional non-collapsible cartridges) with the advantage of increased chemical resistance of the multi-layer foil according to the present invention, thus allowing prolonged storage even of fluids which would be too aggressive to be kept in conventional film cartridges.

The dispensing outlet may project from the rigid head part in a direction opposed to the direction of extent of the flexible film forming the at least one cartridge wall. In this way, e.g., a mixing tip or a dispenser can be attached to the dispensing outlet in a facile manner.

The cartridge chamber may be filled with a material to be dispensed, for example, with a material selected from the group of members consisting of topical medications, medical fluids, wound care fluids, cosmetic and/or skin care preparations, dental fluids, veterinary fluids, adhesive fluids, disinfectant fluids, protective fluids, paints and combinations of the foregoing.

Such fluids and hence the cartridge can therefore be expediently used in the treatment of target areas such as the nose (e.g. anti-histaminic creams etc.), ears, teeth (e.g. molds for implants or buccal applications (e.g. aphtas, gum treatment, mouth sores etc.), eyes (e.g. the precise deposition of drugs on eyelids (e.g. chal-azion, infection, anti-inflammatory, antibiotics etc.), lips (e.g. herpes), mouth, skin (e.g. anti-fungal, dark spot, acne, warts, psoriasis, skin cancer treatment, tattoo removal drugs, wound healing, scar treatment, stain removal, anti-itch applications etc.), other dermatological applications (e.g. skin nails (for example anti-fungal applications, or strengthening formulas etc.) or cytological applications.

Alternatively, the fluids and hence the cartridge can also be used in an industrial sector both for the production of products as well as for the repair and maintenance of existing products, e.g. in the building industry, the automotive industry, the aerospace industry, in the energy sector, e.g. for wind turbines, etc. The dispensing assembly can, for example, be used for the dispensing of construction materials, sealants, bonding material, adhesives, paints, and/or coatings.

The head part of the cartridge may comprise polyethylene, polypropylene, polyamide, polyethylene terephthalate, or polybutylene terephthalate. The head part may for example comprise polyamide in the form of PA-6 (Perlon) or PA-66 (Nylon). Polyamide has the advantage that it has a good mechanical stability and is thus suitable for the head part. Alternatively, polyethylene terephthalate (PET) may also be used for the head part. PET can be processed in a facile manner and has a good chemical resistance. Alternatively, the head part is made of HDPE. The head part may, for instance, be an injection molded part or a 3D-printed part (i.e., a part formed by an additive manufacturing process).

Preferably, a second film may be attached to the head part of the cartridge to cover an internal end face of the head part, and the second film may comprise the multi-layer foil of the present invention as described herein. Such a second film can prevent diffusion of components present in the material stored in the cartridge via the end face. Optionally, the second film may bridge an outlet passage leading from the cartridge chamber to an end of the dispensing outlet.

The cartridge may be a one-component cartridge comprising one cartridge chamber bound by the flexible film forming the cartridge wall. Such a cartridge can expediently store single component mastic materials, sealants and the like.

Alternatively, the cartridge may be a two-component cartridge comprising two cartridge chambers, for example with a respective chamber being provided for a hardener (curing agent), and the other one for a corresponding binder material. In this way the multi-layered foil presented herein can be used for a plethora of types of cartridges and applications. In a two-component cartridge, one or both cartridge chambers may comprise the multi-layered foil according to the present invention.

Optionally each cartridge chamber of a two-component cartridge may be bounded by an own head part comprising a chamber outlet for the respective cartridge chamber, in particular with the head parts either being integrally formed or separately formed, with the separately formed head parts preferably being connectable to one another and/or connected to one another, e.g. via the chamber outlets; and/or with the chamber outlets together forming the dispensing outlet.

## Claims

1. A multi-layer foil comprising an inner layer, a first outer layer on a first side of the inner layer, and a second outer layer on a second side of the inner layer,
wherein the inner layer has a thickness of 15 to 60 µm and comprises ethylene-vinyl alcohol copolymer (EVOH) and/or polyvinyl alcohol (PVOH),
the first outer layer has a thickness of 25 to 80 µm and comprises a first polyolefin, and
the second outer layer has a thickness of 25 to 80 µm and comprises a second polyolefin.

2. The multi-layer foil according to claim 1,
wherein the inner layer has a thickness of 15 to 35 µm, preferably 20 to 30 µm.

3. The multi-layer foil according to any one of the preceding claims,
wherein the first outer layer and/or the second outer layer has a thickness of 45 to 75 µm, preferably 50 to 70 µm.

4. The multi-layer foil according to any one of the preceding claims,
wherein the multi-layer foil has a total thickness of 110 to 180 µm, preferably 130 to 160 µm.

5. The multi-layer foil according to any one of claims 1 to 4,
wherein the first polyolefin is different from the second polyolefin.

6. The multi-layer foil according to any one of claims 1 to 4,
wherein the first polyolefin is identical to the second polyolefin.

7. The multi-layer foil according to any one of the preceding claims,
wherein the first polyolefin and/or the second polyolefin comprises polyethylene (PE) or polypropylene (PP), preferably low-density polyethylene (LDPE) or high-density polyethylene (HDPE).

8. The multi-layer foil according to any one of the preceding claims,
wherein the inner layer comprises ethylene-vinyl alcohol copolymer having an ethylene content of 20 to 50 mole-%.

9. The multi-layer foil according to any one of the preceding claims,
wherein the multi-layer foil is free of polyamide and/or free of polyurethane.

10. The multi-layer foil according to any one of the preceding claims,
wherein the multi-layer foil is an extruded foil.

11. A flexible packaging comprising the multi-layer foil according to any one of the preceding claims.

12. Use of the multi-layer foil according to any one of claims 1 to 10 in a packaging material for an adhesive, preferably a two-component adhesive.

13. Use of the multi-layer foil according to any one of claims 1 to 10 in a packaging material for a two-component system including a first component comprising an epoxy resin and a second component comprising an amine.

14. A cartridge for a material to be dispensed, comprising a rigid head part having a dispensing outlet and a flexible film forming a cartridge wall, with the film bounding a cartridge chamber for the material to be dispensed, extending at least partially in a longitudinal direction of the cartridge and having a front end that is connected to the head part,
wherein the flexible film comprises the multi-layer foil according to any one of claims 1 to 10,
optionally wherein the cartridge is a two-component cartridge comprising two cartridge chambers.

15. The cartridge according to claim 14,
wherein a second film is attached to the head part to cover an internal end face of the head part, and
the second film comprises the multi-layer foil according to any one of claims 1 to 10.
